# EUROPEAN PATENT SPECIFICATION

(11) **EP 3 321 534 B1**
(45) Date of publication and mention of the grant of the patent: **03.07.2019**
(21) Application number: 17200444.2
(22) Date of filing: 07.11.2017
(51) Int. Cl.: F16D 41/07, F16D 41/064

(54) **STARTER AND ONE-WAY CLUTCH**
ANLASSER UND FREILAUFKUPPLUNG
DEMAREUR ET ACCOUPLEMENT ROUE LIBRE

(30) Priority: 07.11.2016 CN 201610973432
(43) Date of publication of application: 16.05.2018
(73) Proprietor: SEG Automotive Germany GmbH, 70499 Stuttgart (DE)
(72) Inventor: Capek, Oliver, 70195 Stuttgart (DE); Yao, Zhigao, 410100 Changsha (CN); Luo, Rencai, 410100 Changsha (CN)
(74) Representative: Steinbauer, Florian

(56) References cited:
- DE-A1-102012 209 809
- US-A1- 2013 074 652
- US-A1- 2013 126 290

## Description

### Technical Field

The present application relates to a starter and one-way clutch and outer race thereof.

### Background Art

Starters are widely applied for starting of internal combustion engines. To prevent damage caused by the reaction produced by high-speed operation of a started engine, a one-way clutch would generally be set in an engine. A one-way clutch may transmit power uni-directionally from a motor to an engine, but will not inversely transfer power from an engine to a motor. However, due to repeated operation of a starter, a one-way clutch will constantly be impacted and easily be damaged; for example, cracks might be produced between a circumferential wall of the outer race of a one-way clutch and an end body by reason of fatigue, which will cause damage to the clutch and result in the failure of engine start.
DE 10 2012 209 809 A1 shows an outer race for a one-way clutch comprising a race chamber surrounded by a circumferential wall and comprising a plurality of roller chambers, the circumferential wall inside the roller chambers having a radial diameter gradually decreasing in a first circumferential direction, comprising an end body at a first end to be integral with the circumferential wall and an opening at a second end between the axial ends of the race chamber, the race chamber bottom comprising a circumferential groove.
US 2013/126290 A1 and US 2013/074652 A1 show similar races of one-way clutches having grooves.

Thus, it is necessary to improve in order to overcome the technical problem in the prior art.

### Invention Content

The present application mainly solves the problem that a starter and its clutch and an outer race may easily be damaged.

To address the technical problem, the present application in one aspect provides an outer race for a one-way clutch comprising a race chamber surrounded by a circumferential wall and comprising a plurality of roller chambers, the circumferential wall inside the roller chambers having a radial diameter gradually decreasing towards a first circumferential direction, comprising an end body at a first end to be integral with the circumferential wall and an opening at a second end between the axial ends of the race chamber, comprising a concave groove in the first end at the end body within each of the roller chambers, and comprising a first transition with a smooth transition between the circumferential wall inside the groove and the end body and a second transition between the circumferential wall outside the groove and the end body, the radius of curvature of the first transition being greater than the radius of curvature of the second transition.

The present application in another aspect provides a one-way clutch comprising: the aforesaid outer race; an inner race, which is mounted into the race chamber from the opening, and which can be freely rotatable and co-axially mounted relative to the outer race; and a plurality of rollers, mounted within the roller chambers and each shaped as a revolution solid, the axial end surface of the rollers can contact the end body, the roller is movable between an engaged position and a disconnected position, the engaged position is in the position of the groove, the disconnected position goes far away from the engaged position in a direction contrary to the first circumferential direction, and an outer circumference surface of the rollers is in contact with the circumferential wall and the inner race simultaneously in the engaged position and not relatively rotatable, and breaks off the contact with the circumferential wall and the inner race simultaneously in the disconnected position and is freely rotatable.

The present application in another aspect provides a starter, comprising a motor for generating rotation power, a pinion for driving an engine and the aforesaid one-way clutch, with the rotation power generated by the motor being transmitted to the pinion by a transmission mechanism, the one-way clutch is connected with the transmission mechanism between the pinion and the motor, and a plurality of

### Specific Embodiments

Specific embodiments of the present application are described in detail in combination with Figures.

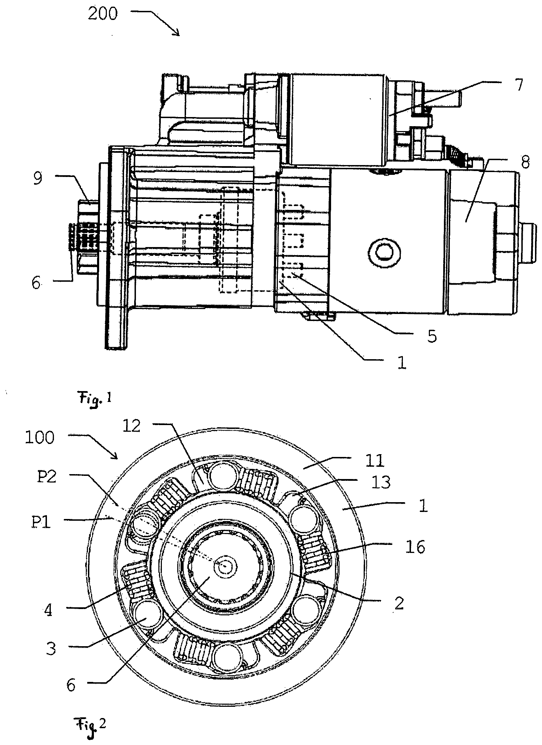

As illustrated in Fig. 1, a starter comprises a motor 8 for generating rotation power and a pinion 9 for driving an engine. With the rotation power generated by the motor 8 being transmitted to the pinion 9 by a transmission mechanism, the one-way clutch 100 is connected with the transmission mechanism between the pinion 9 and the motor 8.

As illustrated in Fig. 2, a one-way clutch 100 comprises a outer race 1, an inner race 2, a plurality of rollers 3 and a plurality of resilient components 4.

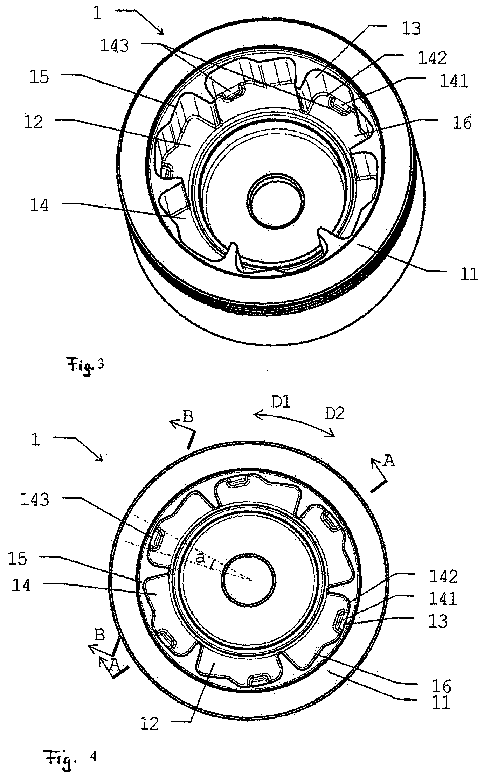

The outer race 1 is formed by cold extrusion. As illustrated in Figs. 3-6, the outer race 1 of one-way clutch 100 is provided with a race chamber 12 surrounded by a circumferential wall 11, and race chamber 12 is provided with six roller chambers 13. In other specific embodiments, the number of roller chambers 13 may be different, e.g., the race chamber 12 is provided with three roller chambers 13. The roller chambers 13 are evenly distributed inside the race chamber. The circumferential wall 11 inside each of the roller chambers 13 has a radial dimension gradually decreasing in a first circumferential direction D1. In the embodiments shown in the figures, the first circumferential direction D1 is anticlockwise, while other embodiments show that the first circumferential direction D1 may be clockwise. An end body 14 is provided at a first end integrated with the circumferential wall 11 and an opening 15 is provided at a second end between the axial ends of the race chamber 12. A groove 143 formed concavely into the first end is provided in the end body 14 within each of the roller chambers 13. The ratio of a circumferential angle α at which the groove 143 extends relative to the outer race 1 to an angle between adjacent roller chambers is not more than 27% but not less than 8.3%. In the embodiment of six rollers, the circumferential angle α at which the groove 143 extends relative to the outer race 1 is not more than 15 degrees but not less than 8 degrees. The ratio of depth at which the groove 143 enters the end body 14 to the outer diameter of the outer race 1 is not less than 1.1% but not more than 4.8%.

A first transition 141 with smooth transition is provided between the circumferential wall 11 inside the groove 143 and the end body 14, and the radius of curvature of the first transition 141 is larger than 0.5 mm. Feasibly, the ratio of the radius of curvature of the first transition 141 to the outer diameter of the outer race 1 is not less than 1.1%, but not more than 4.8%. A second transition 142 is set between the circumferential wall 11 outside the groove 143 and the end body 14 in the roller chamber 13, wherein the radius of curvature of the first transition 141 is larger than the radius of curvature of the second transition 142. In a feasible embodiment, the radius of curvature of the first transition 141 is not less than 1.4 times of the radius of curvature of the second transition 142. For example, the ratio of the radius of curvature of the first transition 1.41 to the outer diameter of the outer race 1 is equal to 1.1% or 1.6%, and the ratio of the radius of curvature of the second transition 142 to the outer diameter of the outer race 1 is equal to 0.63% or 0.79%.

During installation, an inner race 2 is mounted into the race chamber 12 from the opening 15, and is freely rotatable and co-axially mounted relative to the outer race 1. A plurality of rollers 3 are mounted within the roller chambers 13 respectively and each shaped as a revolution solid, which are movable between an engaged position P1 and a disconnected position P2 in a certain range of angle degrees. The disconnected position P2 is displaced from the engaged position P1 in a second direction D2 which is contrary to the first circumferential direction D1, and the engaged position P1 is in the position of the groove 143; that is, the engaged position P1 is within a range of the circumferential angle at which the groove 143 extends. The axial end surface of the rollers 3 can contact the end body 14; that is, the end body 14 provides the roller 13 with axial positioning.

Resilient component chambers 16 are arranged beside and in communication with the roller chambers 13, wherein the resilient components 4 are pre-compressed and resiliently mounted in each of the resilient component chambers 16 and the resilient components 4 exerts a resilient force directed in the first circumferential direction D1 on the respective rollers 3.

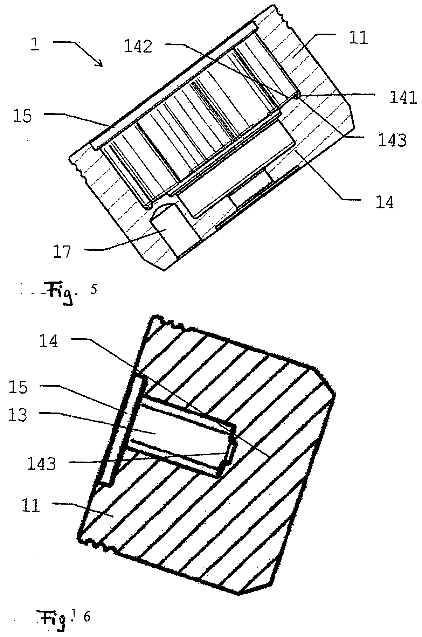

In Fig. 1, the dotted line indicates the position where the one-way clutch 100 is provided in the starter, and a plurality of positioning bodies 5 for coupling rotation power are arranged on the side of the end body 14 of the outer race 1 of the one-way clutch 100 close to the motor 8, wherein the positioning bodies 5 may be integrated with the outer race 1 or be produced separately from the outer race 1, and then will be installed in a slot 17 as shown in Fig. 5. The inner race 2 is fixed to an output shaft 6 onto which the pinion 9 is mounted. When starting the engine (not shown in the figures), an electromagnetic switch 7 powers on the motor 8 and makes it rotate, and the rotating power of motor 8 is coupled via the positioning body 5 to the one-way clutch 100. Meanwhile, the electromagnetic switch 7 acts to drive the pinion 9 to mesh with the flywheel of the engine, wherein the pinion 9 rotates the flywheel of the engine and start the engine.

During operation, the outer circumference surface of the rollers 3 is in contact with the circumferential wall 11 and the inner race 2 simultaneously in the engaged position P1 and cannot relatively rotate, and the outer circumference surface of the rollers 3 breaks off the contact with the circumferential wall 11 and the inner race 2 simultaneously in the disconnected position P2 and can freely rotate. Since the engaged position P1 is at the groove 143, the position where the roller 3 is in contact with the circumferential wall, in other words, is close to the groove 143, and the circumferential wall 11 in the groove 143 and the end body 14 have in between a first transition 141 of smooth transition with a large radius of curvature. Even if the outer circumference surface of roller 3 exerts a large reactive during engagement with the circumferential wall 11, the first transition 141 will also distribute the local stress generated due to the reactive force and, thus, the product will not be damaged easily.

Above specific embodiments are used purely to explain the present application, rather than limit it. Those skilled in the art of relevant technical fields may further make various changes and transformations without departing from the scope of the present application. Therefore, all equivalent technical solutions all fall within the scope of the present application, and the patent protection scope of present application shall be defined by the claims.

## Claims

1. An outer race (1) for a one-way clutch (100) comprising a race chamber (12) surrounded by circumferential wall (11) and comprising a plurality of roller chambers (13), the circumferential wall (11) inside the roller chambers (11) having a radial diameter gradually decreasing in a first circumferential direction (D1), comprising an end body (14) at a first end to be integral with the circumferential wall (11) and an opening (15) at a second end between the axial ends of the race chamber (12), **characterized by** a concave groove (143) in the first end at the end body (14) within each of the roller chambers (13), and comprising a first transition (141) between the circumferential wall (11) inside the groove (143) and the end body (14) and a second transition (142) between the circumferential wall (11) outside the groove (143) and the end body (14), the radius of curvature of the first transition (141) being greater than the radius of curvature of the second transition (142).

2. The outer race (1) of claim 1, wherein the ratio of the radius of curvature of the first transition (141) to the outer diameter of the outer race (1) is not less than 1.1%, but not more than 4.8%.

3. The outer race (1) of claim 1 or 2, wherein the ratio of the radius of curvature of the first transition (141) to the outer diameter of the outer race (1) is more than 0.79%.

4. The outer race (1) of any one of the preceding claims, wherein the radius of curvature of the first transition (141) is not less than 1.4 times of the radius of curvature of the second transition (142).

5. The outer race (1) of any one of the preceding claims, wherein the ratio of a circumferential angle at which the concave groove (143) extends relative to the outer race (1) to an angle between adjacent roller chambers is not more than 27% but not less than 8.3%.

6. The outer race (1) of any one of the preceding claims, wherein the ratio of depth at which the concave groove (143) enters the end body (14) to the outer diameter of the outer race (1) is not less than 0.79% but not more than 4.8%.

7. The outer race (1) of any one of the preceding claims, which is formed by cold extrusion.

8. A one-way clutch (100), **characterized in that** comprising:
the outer race (1) of any one of claims 1-7;
an inner race (2), which is mounted into the race chamber (12) from the opening (15), and which can be freely rotatable and co-axially mounted relative to the outer race (1); and
a plurality of rollers (3), mounted within the roller chambers (13) and each shaped as a revolution solid, which is movable between an engaged position (P1) and a disconnected position (P2), wherein the axial end surface of the rollers (3) can contact the end body (14), the engaged position (P1) is in the position of the concave groove (143), the disconnected position (P2) goes far away from the engaged position (P1) in a direction contrary to first circumferential direction (D1), and an outer circumference surface of the rollers (3) is in contact with the circumferential wall (11) and the inner race (2) simultaneously in the engaged position (P1), and breaks off the contact with the circumferential wall (11) and the inner race (2) simultaneously in the disconnected position (P2).

9. The one-way clutch (100) of claim 8, further comprising: a plurality of resilient components (4); and, resilient component chambers (16) arranged beside and in communication with the roller chambers (13), wherein one of the resilient components (4) is pre-compressed and resiliently mounted in each of the resilient component chambers (16) and the resilient components (4) exerts to one of the rollers (3) a resilient force pointing at the first circumferential direction (D1).

10. A starter (200), comprising a motor (8) for generating rotation power and a pinion (9) for driving an engine, with the rotation power generated by the motor (8) being transmitted to the pinion (9) by a transmission mechanism, and **characterized in that** further comprising the one-way clutch (100) of claim 8 or 9, wherein the one-way clutch (100) is connected with the transmission mechanism between the pinion (9) and the motor (8), and a plurality of positioning bodies (5) for coupling rotation power are arranged on the side of the end body (14) close to the motor (8).

## Patentansprüche

1. Äußerer Laufring (1) für eine Einwegkupplung (100), umfassend eine Laufkammer (12), die von einer Umfangswand (11) umgeben ist und eine Vielzahl von Rollenkammern (13) umfasst, wobei die Umfangswand (11) innerhalb der Rollenkammern (11) einen radialen Durchmesser aufweist, der in einer ersten Umfangsrichtung (D1) allmählich abnimmt, umfassend einen Endkörper (14) an einem ersten Ende, der einstückig mit der Umfangswand (11) ist, und eine Öffnung (15) an einem zweiten Ende zwischen den axialen Enden der Laufkammer (12), **gekennzeichnet durch** eine konkave Nut (143) im ersten Ende am Endkörper (14) innerhalb jeder der Rollenkammern (13), und umfassend einen ersten Übergang (141) zwischen der Umfangswand (11) innerhalb der Nut (143) und dem Endkörper (14) und einen zweiten Übergang (142) zwischen der Umfangswand (11) außerhalb der Nut (143) und dem Endkörper (14), wobei der Krümmungsradius des ersten Übergangs (141) größer ist als der Krümmungsradius des zweiten Übergangs (142).

2. Äußerer Laufring (1) nach Anspruch 1, wobei das Verhältnis des Krümmungsradius des ersten Übergangs (141) zum Außendurchmesser des äußeren Laufrings (1) nicht weniger als 1,1%, aber nicht mehr als 4,8% beträgt.

3. Äußerer Laufring (1) nach Anspruch 1 oder 2, wobei das Verhältnis des Krümmungsradius des ersten Übergangs (141) zum Außendurchmesser des äußeren Laufrings (1) mehr als 0,79% beträgt.

4. Äußerer Laufring (1) nach einem der vorstehenden Ansprüche, wobei der Krümmungsradius des ersten Übergangs (141) nicht weniger als das 1,4-fache des Krümmungsradius des zweiten Übergangs (142) ist.

5. Äußerer Laufring (1) nach einem der vorstehenden Ansprüche, wobei das Verhältnis eines Umfangswinkels, mit dem sich die konkave Nut (143) gegenüber dem äußeren Laufring (1) erstreckt, zu einem Winkel zwischen benachbarten Rollenkammern nicht mehr als 27%, aber nicht weniger als 8,3% ist.

6. Äußerer Laufring (1) nach einem der vorstehenden Ansprüche, wobei das Verhältnis der Tiefe, mit der die konkave Nut (143) in den Endkörper (14) eintritt, zum Außendurchmesser des äußeren Laufrings (1) nicht weniger als 0,79%, aber nicht mehr als 4,8% ist.

7. Äußerer Laufring (1) nach einem der vorstehenden Ansprüche, der durch Kaltfließpressen gebildet wird.

8. Einwegkupplung (100), **dadurch gekennzeichnet, dass** sie umfasst:
den äußeren Laufring (1) nach einem der Ansprüche 1-7;
einen inneren Laufring (2), der von der Öffnung (15) aus in der Laufkammer (12) gelagert ist und der frei drehbar und koaxial in Bezug auf den äußeren Laufring (1) gelagert werden kann;
und eine Vielzahl von Rollen (3), die innerhalb der Rollenkammern (13) gelagert und jeweils als Rotationskörper ausgebildet sind, der zwischen einer Eingriffsposition (P1) und einer Trennposition (P2) beweglich ist, wobei die axiale Endfläche der Rollen (3) den Endkörper (14) berühren kann, wobei die Eingriffsposition (P1) in der Position der konkaven Nut (143) ist, wobei die Trennposition (P2) in eine Richtung entgegen der ersten Umfangsrichtung (D1) weit von der Eingriffsposition (P1) entfernt ist bzw. wird und eine Außenumfangsfläche der Rollen (3) mit der Umfangswand (11) und dem inneren Laufring (2) gleichzeitig in der Eingriffsposition (P1) in Kontakt ist und den Kontakt mit der Umfangswand (11) und dem inneren Laufring (2) gleichzeitig in der Trennposition (P2) unterbricht.

9. Einwegkupplung (100) nach Anspruch 8, ferner umfassend: eine Vielzahl von elastischen Bauteilen (4); und elastische Bauteilkammern (16), die neben und in Verbindung mit den Rollenkammern (13) angeordnet sind, wobei eines der elastischen Bauteile (4) vorkomprimiert und elastisch in jeder der elastischen Bauteilkammern (16) gelagert ist und die elastischen Bauteile (4) auf eine der Rollen (3) eine elastische Kraft ausüben, die in die erste Umfangsrichtung (D1) zeigt.

10. Starter (200), umfassend einen Motor (8) zum Erzeugen von Drehkraft und ein Ritzel (9) zum Antreiben eines Motors, wobei die vom Motor (8) erzeugte Drehkraft durch einen Übertragungsmechanismus auf das Ritzel (9) übertragen wird, und **dadurch gekennzeichnet, dass** er ferner die Einwegkupplung (100) nach Anspruch 8 oder 9 umfasst, wobei die Einwegkupplung (100) mit dem Übertragungsmechanismus zwischen dem Ritzel (9) und dem Motor (8) verbunden ist, und eine Vielzahl von Positionierungskörpern (5) zur Kopplung der Drehkraft auf der Seite des Endkörpers (14) nahe dem Motor (8) angeordnet sind.

## Revendications

1. Chemin de roulement extérieur (1) pour un embrayage à roue libre (100) comportant une chambre de chemin de roulement (12) entourée d'une paroi circonférentielle (11) et comportant une pluralité de chambre de rouleaux (13), la paroi circonférentielle (11) à l'intérieur des chambres de rouleaux (13) ayant un diamètre radial diminuant graduellement dans une première direction circonférentielle (D1), comportant un corps d'extrémité (14) à une première extrémité pour être solidaire de la paroi circonférentielle (11) et une ouverture (15) à une seconde extrémité entre les extrémités axiales de la chambre de chemin de roulement (12), **caractérisé par** une rainure concave (143) dans la première extrémité sur le corps d'extrémité (14) à l'intérieur de chacune des chambres de rouleaux (13), et comportant une première transition (141) entre la paroi circonférentielle (11) à l'intérieur de la rainure (143) et le corps d'extrémité (14), et une seconde transition (142) entre la paroi circonférentielle (11) à l'extérieur de la rainure (143) et du corps d'extrémité (14), le rayon de courbure de la première transition (141) étant supérieur au rayon de courbure de la seconde transition (142).

2. Chemin de roulement extérieur (1) selon la revendication 1, dans lequel le rapport du rayon de courbure de la première transition (141) sur le diamètre extérieur du chemin de roulement extérieur (1) n'est pas inférieur à 1,1 %, mais n'est pas supérieur à 4,8 %.

3. Chemin de roulement extérieur (1) selon la revendication 1 ou 2, dans lequel le rapport du rayon de courbure de la première transition (141) sur le diamètre extérieur du chemin de roulement extérieur (1) est supérieur à 0,79 %.

4. Chemin de roulement extérieur (1) selon l'une quelconque des revendications précédentes, dans lequel le rayon de courbure de la première transition (141) n'est pas inférieur à 1,4 fois le rayon de courbure de la seconde transition (142) .

5. Chemin de roulement extérieur (1) selon l'une quelconque des revendications précédentes, dans lequel le rapport d'un angle circonférentiel auquel la rainure concave (143) s'étend par rapport au chemin de roulement extérieur (1) sur un angle entre des chambres de rouleaux adjacentes n'est pas supérieur à 27 % mais n'est pas inférieur à 8,3 %.

6. Chemin de roulement extérieur (1) selon l'une quelconque des revendications précédentes, dans lequel le rapport de profondeur auquel la rainure concave (143) pénètre dans le corps d'extrémité (14) sur le diamètre extérieur du chemin de roulement extérieur (1) n'est pas inférieur à 0,79 % mais n'est pas supérieur à 4,8 %.

7. Chemin de roulement extérieur (1) selon l'une quelconque des revendications précédentes, qui est formé par extrusion à froid.

8. Embrayage à roue libre (100), **caractérisé en ce qu'**il comporte :
le chemin de roulement extérieur (1) selon l'une quelconque des revendications 1 à 7,
un chemin de roulement intérieur (2), qui est monté dans la chambre de chemin de roulement (12) à partir de l'ouverture (15), et qui peut librement tourner et être monté coaxialement par rapport au chemin de roulement extérieur (1) ; et
une pluralité de rouleaux (3), montés à l'intérieur des chambres de rouleaux (13) et chacun formé comme un solide de révolution, qui est mobile entre une position en prise (P1) et une position libérée (P2), dans lequel la surface d'extrémité axiale des rouleaux (3) peut venir en contact avec le corps d'extrémité (14), la position en prise (P1) est dans la position de la rainure concave (143), la position libérée (P2) va en s'éloignant de la position en prise (P1) dans une direction contraire à la première direction circonférentielle (D1), et une surface circonférentielle extérieure des rouleaux (3) est simultanément en contact avec la paroi circonférentielle (11) et le chemin de roulement intérieur (2) dans la position en prise (P1), et rompt simultanément le contact avec la paroi circonférentielle (11) et le chemin de roulement intérieur (2) dans la position libérée (P2) .

9. Embrayage à roue libre (100) selon la revendication 8, comportant en outre : une pluralité de composants élastiques (4) ; et des chambres de composants élastiques (16) agencées à côté des chambres de rouleaux (13) et en communication avec celles-ci, dans lequel l'un des composants élastiques (4) est pré-comprimé et monté de manière élastique dans chacune des chambres de composants élastiques (16), et les composants élastiques (4) exercent sur l'un des rouleaux (3) une force élastique pointant dans la première direction circonférentielle (D1).

10. Démarreur (200), comportant un moteur (8) pour générer une puissance de rotation et un pignon (9) pour entraîner un moteur, la puissance de rotation générée par le moteur (3) étant transmise au pignon (9) par un mécanisme de transmission, et **caractérisé en ce qu'**il comporte en outre l'embrayage à roue libre (100) selon la revendication 8 ou 9, dans lequel l'embrayage à roue libre (100) est relié au mécanisme de transmission entre le pignon (9) et le moteur (8), et une pluralité de corps de positionnement (5) pour coupler la puissance de rotation sont agencés sur le côté du corps d'extrémité (14) près du moteur (8).
